# EUROPEAN PATENT SPECIFICATION

(11) **EP 3 285 009 B1**
(45) Date of publication and mention of the grant of the patent: **07.06.2023**
(21) Application number: 16184304.0
(22) Date of filing: 16.08.2016
(51) Int. Cl.: F24C 15/10, F16F 1/12, H05B 6/12

(54) **PRESSING ELEMENT AND INDUCTION HOB COMPRISING A PRESSING ELEMENT**
ANDRÜCKELEMENT SOWIE INDUKTIONSKOCHFELD MIT EINEM ANDRÜCKELEMENT
ÉLÉMENT DE PRESSAGE ET TABLE DE CUISSON À INDUCTION COMPRENANT UN ÉLÉMENT DE PRESSAGE

(43) Date of publication of application: 21.02.2018
(73) Proprietor: Electrolux Appliances Aktiebolag, 105 45 Stockholm (SE)
(72) Inventor: NEUKAMM, Alwin, 91541 Rothenburg ob der Tauber (DE); LEIKAM, Juergen, 91541 Rothenburg ob der Tauber (DE); KLEIN, Gerhard, 91541 Rothenburg ob der Tauber (DE); LEYH, Björn, 91541 Rothenburg ob der Tauber (DE)
(74) Representative: Electrolux Group Patents

(56) References cited:
- EP-A1- 1 579 731
- EP-A1- 2 079 275
- EP-A2- 2 975 289
- CN-A- 104 180 401
- CN-Y- 200 971 905
- DE-A1-102007 032 762
- JP-A- 2007 335 089
- US-A1- 2010 044 367

## Description

The present invention relates generally to the field of pressing elements. More specifically, the present invention is related to a pressing entity adapted to press an induction heating unit of an induction hob against a hob plate according to the preamble of claim 1.

### BACKGROUND OF THE INVENTION

Induction hobs for preparing food are well known in prior art. Induction hobs typically comprise at least one induction coil placed below a hob plate in order to heat a piece of cookware.

In order to increase the efficiency of inductive coupling between the piece of cookware and the induction coil, the distance between the hob plate and the induction coil should be as low as possible.

European Patent Application EP 2 975 289 A2 discloses an induction hob comprising pressing entities for pressing the induction coil against the hob plate.

International Patent Application WO 2004/060020 A1 discloses an induction heating apparatus comprising pressing means for pressing an induction entity support upwardly.

US Patent Application US 2010/0044367 A1 discloses an induction heating device. Said device comprises multiple support units which support an induction coil base.

A drawback of the known solution is that the pressing entities comprise a complex structure and mounting of the pressing entity at the induction heating unit is difficult.

### SUMMARY OF THE INVENTION

It is an objective of the embodiments of the invention to provide a pressing entity with a simple structure which enables a technically simple integration into the induction hob, thereby reducing the assembling effort. The objective is solved by the features of the independent claims. Preferred embodiments are given in the dependent claims. If not explicitly indicated otherwise, embodiments of the invention can be freely combined with each other.

According to the present invention the spring coupling portion comprises spring fixing means for fixing a spring element portion, said spring fixing means comprises hook-shaped protrusions being adapted to engage into a coil of the spring element, wherein said hook-shaped protrusions radially protrude into the spring coupling portion, and wherein coupling element comprises fixing means engaging into a section of the induction heating unit for fixing the coupling element at the induction heating unit, and wherein said fixing means comprises one or more further hook-shaped protrusions being adapted to engage into or behind a section of the induction heating unit, and wherein the coupling element comprises a radially protruding collar forming a contact surface being adapted to rest against a planar portion close to the opening or recess of the induction heating unit, and wherein the one or more further hook-shaped protrusions are adapted to engage behind an edge of the opening or recess when the collar rests against the planar portion of the induction heating unit.

Said pressing entity is advantageous because the number of parts of the pressing entity is reduced and - due to the usage of the coupling element which connects the pressing element with the induction heating unit, specifically a support plate of the induction heating unit - the assembling of the induction hob is significantly simplified. By the spring fixing means an undesired falling out of the spring element, for example, during assembling or maintenance is avoided. The hook-shaped protrusions may comprise hook portions which provide a snap connection between the spring element and the coupling element. Thereby, a technically simple fixing of the spring element within the coupling element is obtained. Said hook-shaped protrusions may be deformable or bendable in order to enable an insertion of the spring element into the spring coupling portion. In other words, a snap or click connection between the spring element and the coupling element is provided. Thereby, a secure fixing of the spring element within the coupling element is obtained. The fixing means allows that the coupling element is securely mounted at the induction heating unit. The planar portion may be a support plate, also referred to as coil carrier, provided at the induction heating unit. The collar may provide a support on which the induction heating unit rests on in the installed position. Said collar may comprise an annular shape or may have two or more arc-shaped portions circumferentially arranged at the coupling element. The collar and the hook-shaped protrusions may be arranged at opposite sides of the planar portion thereby mounting the pressing entity by a click connection at the induction heating unit.

According to embodiments, the spring coupling portion comprises a recess for receiving a portion of said spring element. Within said recess, for example, a free end of a spring element may be received whereas the other free end protrudes out of the coupling element. Thereby, the connection between the coupling element and the spring element is simplified.

According to embodiments, the spring element is a compression spring, specifically a compression spiral spring. Thereby, by placing the protruding free end of the spring element on a counter-bearing portion (e.g. a housing portion) and compressing the spring element, an induction heating unit operatively coupled with the coupling element of the pressing entity and including one or more induction coils can be pressed against the hob plate.

According to embodiments, a first free end of the spring element is arranged within the coupling element and a second free end protrudes out of the coupling element. Thereby, the structure of the pressing entity is simplified because no spring-operated pressing pin is required.

According to embodiments, the fixing means is adapted for fixing a first free end of the spring element in the spring coupling portion. Thereby, an undesired falling out of the spring element, for example, during assembling or maintenance is avoided.

According to other embodiments, the spring fixing means comprises a thread adapted to interact with the coils of the spiral spring in order to screw the spiral spring with the coupling element.

According to embodiments, the coupling element is adapted to be inserted into an opening or recess provided within the induction heating unit. Thereby, a technically simple coupling between the induction heating unit and the pressing element is obtained.

According to embodiments, the coupling element comprises an outer cross section being adapted to the cross section of the opening or recess provided within the induction heating unit. For example, the cross section of the coupling element comprises a circular shape or arc-shaped portions in order to be received in a circular opening or recess of the induction heating unit. Thereby, the coupling element is centred within said opening or recess.

More specifically, the section of the induction heating unit for fixing the coupling element at the induction heating unit may be an edge of the opening or an edge or aperture provided within a recess of the induction heating unit. Thereby, the coupling element is securely mounted at the induction heating unit.

More in detail, the further hook-shaped protrusions are adapted to engage behind an edge of an opening of the induction heating unit. Thereby, the coupling element is releasably but securely mounted at the induction heating unit.

According to embodiments, the coupling element comprises a contact portion forming a poka-yoke portion or poka-yoke element. In other words, the contact portion may be an asymmetric portion, for example, an asymmetric protrusion which ensures a desired integration of the pressing element and therefore a desired assembling of the induction hob.

According to a second aspect, the invention relates to an induction hob comprising an induction heating unit including one or more induction coils and a hob plate. The induction heating unit comprises one or more pressing entities as described before in order to press the induction heating unit, specifically the one or more induction coils or an isolation layer placed above the one or more induction coils against the hob plate.

The term "induction heating unit" as used in the present disclosure refers to an entity comprising at least one induction coil, preferably at least two induction coils. The entity preferably further comprises a support plate, also referred to as coil carrier. Preferably, the induction coil(s) may be attached to the top side of the support plate. The entity preferably further comprises at least one isolation layer, particularly at least one mica layer sheet. The isolation layer, particularly the mica layer sheet may cover at least one induction coil, particularly each isolation layer may cover at least two induction coils.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example embodiment of a pressing entity in a first perspective view;
- Fig. 2: shows an example embodiment of a pressing entity in a second perspective view;
- Fig. 3: shows parts of an induction hob, namely an isolation layer arranged above an induction heating unit including pressing entities in a first perspective view;
- Fig. 4: shows a sectional view of the induction heating unit of Fig. 3 including a pressing entity;
- Fig. 5: shows parts of an induction hob, namely an isolation layer arranged at an induction heating unit including pressing entities in a second perspective view; and
- Fig. 6: shows a sectional view of the induction heating unit of Fig. 5 including a pressing entity.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

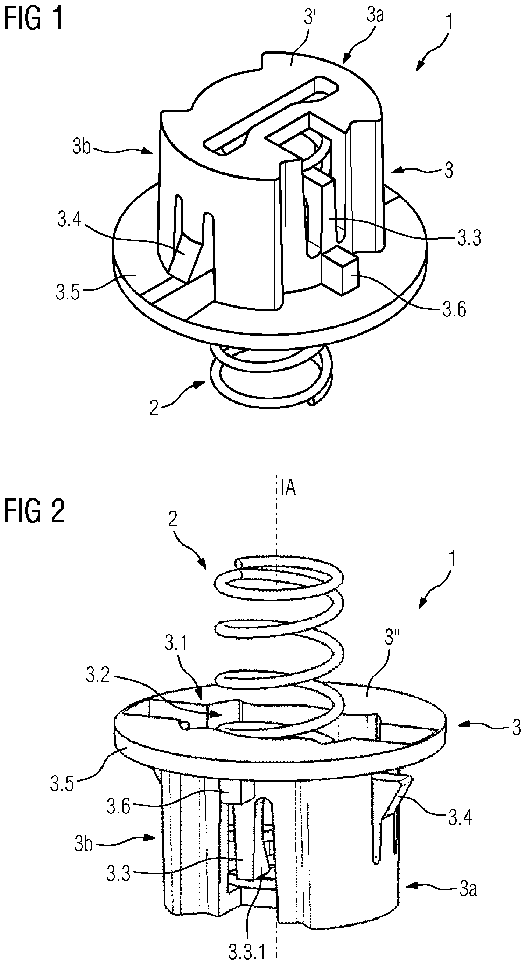

Fig. 1 and 2 show an example embodiment of a pressing entity 1 according to the invention. The pressing element 1 may be used within an induction hob for pressing an induction heating unit against the hob plate.

More in detail, the pressing element 1 comprises a spring element 2 and a coupling element 3 which is used for coupling the spring element with an induction heating unit comprising one or more induction coils.

As shown in Fig. 1 and 2, the coupling element 3 comprises a hat-like shape with an upper side 3' and a lower side 3". On the one hand, the coupling element 3 is adapted to receive a section of the spring element 2. On the other hand, the coupling element 3 itself is adapted to be received within an opening or recess of the induction heating unit in order to enable a pressing of the induction heating unit against a hob plate by means of said spring element 2. Said coupling element 3 may be releasably coupled with the induction heating unit by a click or snap connection.

As shown in Fig. 2, the coupling element 3 comprises a spring coupling portion 3.1 adapted to receive a portion of the spring element 2. In the present embodiment, the spring element 2 is a spiral spring, specifically a spiral compression spring. The spring coupling portion 3.1 may be a recess 3.2 which is formed within the coupling element 3. Due to said recess 3.2, the coupling element 3 may have a sleeve-like shape.

Said recess 3.2 is adapted to receive a portion of the spring element 2, specifically a free end portion of the spring element 2. The depth of the recess 3.2 is chosen such that the second free end of the spring element 2 protrudes out of the lower side 3" of the coupling element 3. The recess 3.2 may be adapted to receive the spring element 2 in a form-fitted manner.

In order to avoid that the spring element 2 falls out of the coupling element 3, the coupling element 3 comprises spring fixing means adapted to secure the spring element 2 in the partly inserted position. In the present embodiment, the spring fixing means comprise one or more hooks or hook-shaped protrusions 3.3. Preferably, one or more pairs of hook-shaped protrusions 3.3 are arranged at opposite sides of the recess 3.2. The hook-shaped protrusions 3.3 may extend along an insertion axis IA and may comprise hook portions 3.3.1 which protrude into the recess 3.2. In case of a spring element 2 inserted into the recess 3.2, said hook portions 3.3.1 interact with the coils or windings of the spring element 2 thereby fixing the spring element 2 within the recess 3.2. More in detail, the hook portions 3.3.1 engage with a coil or winding of the spring element 2 (cf. Fig. 2). The hook portions 3.3.1 may be at least partially flexible in order to be bent outwardly when inserting the spring element 2.

According to other embodiments, the spring fixing means may comprise a thread which corresponds with the coils of the spring element 2. Thus, the spring element 2 may be fixed within the recess 3.2 by screwing the spring element 2 into the recess 3.2. Also, other spring fixing means may be possible.

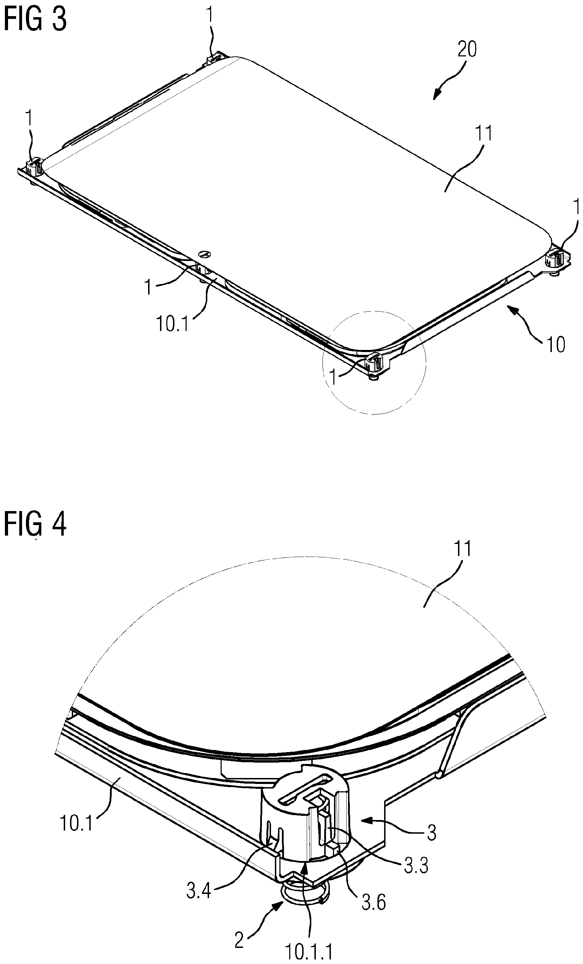

Fig. 3 shows a schematic illustration of an induction hob 20. The induction hob 20 comprises at least one heating zone, preferably provided at a hob plate (not shown in Fig. 3 to 6) . The induction hob may comprise one or more isolation layers 11, beneath which one or more induction coils are provided. The isolation layer 11 may be, for example, a mica layer. Said one or more induction coils are arranged at a support plate 10.1 of an induction heating unit 10. One or more pressing entities 1 are arranged at the induction heating unit 10 in order to press the induction heating unit 10 comprising the induction coils against the hob plate. More in detail, the pressing entities 1 may, for example, rest with its spring elements 2 at a frame of a power board unit or a housing of said power board unit. Preferably, by means of said pressing entities 1, an induction unit assembly comprising the support plate 10.1, the one or more induction coils and the at least one isolation layer 11 is pressed against the hob plate.

As shown in Fig. 3 to 6, the induction heating unit 10, specifically the support plate 10.1 of an induction heating unit 10 comprises one or more openings 10.1.1 which are adapted to receive the coupling element 3 of the pressing entity 1. For example, the coupling element 3 may be inserted with its top portion provided at the upper side 3' into said opening 10.1.1 and may be fixed into said opening 10.1.1 in order to avoid an undesired falling out of the pressing entity 1.

More in detail, the coupling element 3 may comprise a cross section (in a plane perpendicular to the insertion axis IA) which is adapted to the geometry of the opening 10.1.1 in order to receive the coupling element 3 within the opening 10.1.1. Said receiving may be implemented in a at least partially form-fitted, centred manner. According to the present embodiment, the coupling element 3 comprises a pair of arc-shaped portions 3a, 3b which are preferably arranged at opposite sides. In addition, one or more further contact portions 3.6 may be provided for achieving a form-fitted and/or centred arrangement within the opening 10.1.1. The contact portion 3.6 may form a poka-yoke portion ensuring that the pressing entity 1 can only be attached in a certain installation position at the support plate 10.1. With respect to a central axis (e.g. the insertion axis IA), the arc-shaped portions 3a, 3b comprise a radius which is equal or essentially equal to the radius of the opening 10.1.1. Alternatively, a complete circular shape of the cross-section of the coupling element 3 may be possible. In other embodiments, the opening 10.1.1 may comprise an oval or polygon shape and the cross-sectional shape of the coupling element 3 may be adapted to the shape of the opening 10.1.1.

At the lower side 3", specifically at the lower edge, the coupling element 3 comprises a collar 3.5. The collar 3.5 is formed at the circumferential surface of the coupling element 3 and protrudes radially from said circumferential surface. Said collar 3.5 forms a contact surface which rests against the support plate 10.1 close to the opening 10.1.1. Thereby, a resilient contact of the coupling element 3 at the support plate 10.1 is achieved. In installation position, the collar 3.5 may rest against the bottom surface of the support plate 10.1.

In order to avoid an undesired falling of the pressing entity 1 out of the induction heating unit 10, the coupling element 3 may comprise fixing means adapted to secure the coupling element 3 at the induction heating unit 10. Said fixing means may comprise one or more portions engaging behind the edge of the opening 10.1.1 at the opposite side of the collar 3.5 thereby realizing a secure mounting of the coupling element 3 at the induction heating unit 10. In the present embodiment, said fixing means are formed by hook-shaped protrusions 3.4. Said hook-shaped protrusions 3.4 or hooks may protruding radially outwardly from the circumferential surface of the coupling element 3 in an area slightly above the collar 3.5 in order to be able to engage being the edge of the opening 10.1.1 when inserting the pressing entity 1 in the support plate 10.1. Said hook-shaped protrusions 3.4 may be adapted to be bent radial inwardly in order to enable the pressing entity 1 to be inserted in the opening 10.1.1.

According to other embodiments, the coupling element 3 may comprise a thread for fixing the pressing entity 1 at the support plate 10.1. It is worth mentioning that also other fixing means may be possible.

The coupling element 3 may be made of an electrically non-conductive material, specifically plastic. Thereby, an electrical isolation between the induction heating unit 10 and the element or portion, on which the free end of the spring element 2 rests on (e.g. a housing portion) is possible.

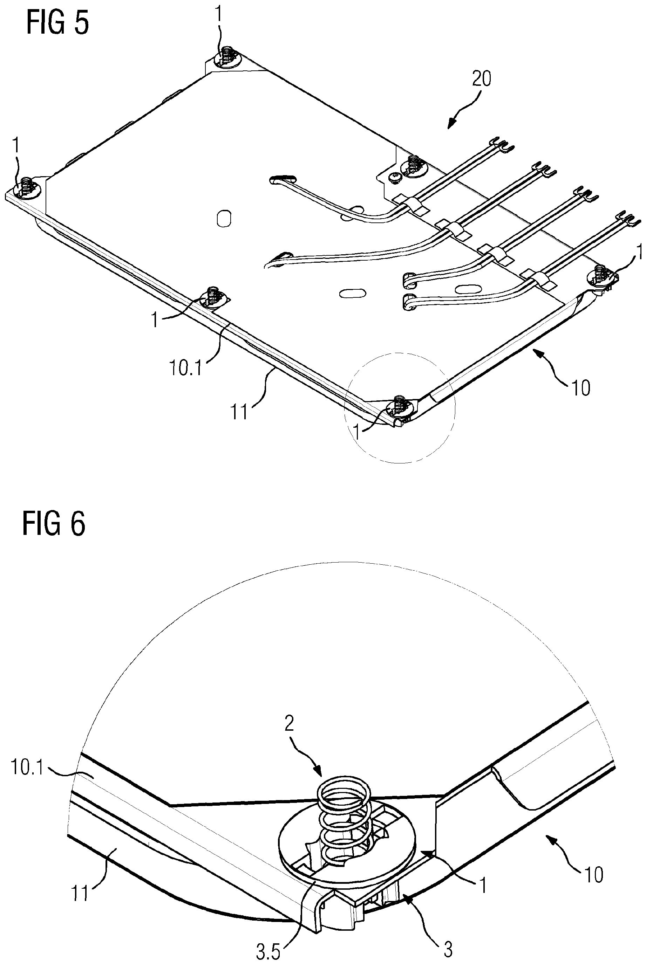

Fig. 3 to 6 show the induction heating unit 10 comprising multiple pressing entities 1 which are adapted to press the induction coils arranged at the support plate 10.1 of the heating unit 10 against the hob plate. The induction coils may directly positioned at the hob plate or an intermediate isolation layer 11 may be arranged between the induction coils and the hob plate. As best seen in Fig. 4 and 6, the coupling element 3 is inserted into the opening 10.1.1 until the collar 3.5 rests against the support plate 10.1. In said inserted position, the hook-shaped protrusions 3.4 engage behind the opening edge in order to secure the pressing entity 1 at the support plate 10.1. In said inserted position, the spring element 2 protrudes from the lower side of the support plate 10.1. By placing the induction heating unit 10 in a housing or on a frame of a power unit, for example, the spring elements 2 are at least partially compressed thereby pressing the induction heating unit 10 against the hob plate.

It should be noted that the description and drawings merely illustrate the principles of the proposed pressing entity, respectively induction hob. Those skilled in the art will be able to implement various arrangements that, although not explicitly described or shown herein, embody the principles of the invention.

### List of reference numerals

- 1: pressing entity
- 2: spring element
- 3: coupling element
- 3': upper side
- 3": lower side
- 3a, 3b: arc-shaped portion
- 3.1: spring coupling portion
- 3.2: recess
- 3.3: hook-shaped protrusion
- 3.3.1: hook portion
- 3.4: hook-shaped protrusion
- 3.5: collar
- 3.6: contact portion

- 10: induction heating unit
- 10.1: support plate
- 10.1.1: opening
- 11: isolation layer

- 20: induction hob

- IA: insertion axis

## Claims

1. Pressing entity (1) for pressing an induction heating unit (10) against a hob plate , the pressing entity (1) comprising:
- a spring element (2);
- a coupling element (3), said coupling element (3) being adapted to detachably couple the pressing entity (1) with the induction heating unit (10);
wherein the coupling element (3) comprises a spring coupling portion (3.1) adapted to receive the spring element (2), said spring coupling portion (3) being adapted to receive the spring element (2) such that a portion of the spring element (2) protrudes out of the coupling element (3),
wherein
the spring coupling portion (3.1) comprises spring fixing means for fixing a spring element portion, said spring fixing means comprises hook-shaped protrusions (3.3) being adapted to engage into a coil of the spring element (2), wherein said hook-shaped protrusions (3.3) radially protrude into the spring coupling portion (3.1), and wherein the coupling element (3) comprises fixing means engaging into a section of the induction heating unit (10) for fixing the coupling element (3) at the induction heating unit (10), and wherein said fixing means comprises one or more further hook-shaped protrusions (3.4) being adapted to engage into or behind a section of the induction heating unit (10), and wherein the coupling element (3) comprises a radially protruding collar (3.5) forming a contact surface being adapted to rest against a planar portion close to the opening (10.1.1) or recess of the induction heating unit (10), and wherein the one or more further hook-shaped protrusions (3.4) are adapted to engage behind an edge of the opening (10.1.1) or recess when the collar (3.5) rests against the planar portion of the induction heating unit (10).

2. Pressing entity (1) according to claim 1, wherein the spring coupling portion (3.1) comprises a recess (3.2) for receiving a portion of said spring element (2).

3. Pressing entity (1) according to claim 1 or 2, wherein the spring element (2) is a compression spring, specifically a compression spiral spring.

4. Pressing entity (1) according to anyone of the preceding claims, wherein a first free end of the spring element (2) is arranged within the coupling element (3) and a second free end protrudes out of the coupling element (3).

5. Pressing entity (1) according to anyone of the preceding claims, wherein the spring fixing means is adapted for fixing a first free end of the spring element (2) in the spring coupling portion (3.1).

6. Pressing entity (1) according to anyone of the preceding claims, wherein the coupling element (3) is adapted to be inserted into an opening (10.1.1) or recess provided within the induction heating unit (10).

7. Pressing entity (1) according to claim 6, wherein the coupling element (3) comprises an outer cross section being adapted to the cross section of the opening (10.1.1) or recess provided within the induction heating unit (10).

8. Pressing entity (1) according to claim 6 or 7, wherein the cross section of the coupling element (3) comprises a circular shape or arc-shaped portions (3a, 3b) in order to be received in a circular opening (10.1.1) or recess of the induction heating unit (10).

9. Induction hob comprising an induction heating unit (10) comprising one or more induction coils and a hob plate, the induction heating unit (10) comprising one or more pressing entities (1) according to anyone of the preceding claims in order to press the induction heating unit (10) against the hob plate.

## Patentansprüche

1. Anpresseinheit (1) zum Pressen einer Induktionsheizeinheit (10) gegen eine Kochfeldplatte, wobei die Anpresseinheit (1) Folgendes umfasst:
- ein Federelement (2);
- ein Kopplungselement (3), wobei das Kopplungselement (3) dazu ausgebildet ist, die Anpresseinheit (1) mit der Induktionsheizeinheit (10) abnehmbar zu koppeln;
wobei das Kopplungselement (3) einen Federkopplungsabschnitt (3.1) umfasst, der dazu ausgebildet ist, das Federelement (2) aufzunehmen, wobei der Federkopplungsabschnitt (3) dazu ausgebildet ist, das Federelement (2) derart aufzunehmen, dass ein Abschnitt des Federelements (2) aus dem Kopplungselement (3) herausragt,
wobei
der Federkopplungsabschnitt (3.1) ein Federfixierungsmittel zum Fixieren eines Federelementabschnitts umfasst, wobei das Federfixierungsmittel hakenförmige Vorsprünge (3.3) umfasst, die dazu ausgebildet sind, in eine Windung des Federelements (2) einzugreifen, wobei die hakenförmigen Vorsprünge (3.3) radial in den Federkopplungsabschnitt (3.1) hineinragen, und wobei das Kopplungselement (3) Fixierungsmittel umfasst, die in einen Abschnitt der Induktionsheizeinheit (10) zum Fixieren des Kopplungselements (3) an der Induktionsheizeinheit (10) eingreifen, und wobei das Fixierungsmittel einen oder mehrere weitere hakenförmige Vorsprünge (3.4) umfasst, die dazu ausgebildet sind, in oder hinter einen Abschnitt der Induktionsheizeinheit (10) einzugreifen, und wobei das Kopplungselement (3) eine radial hervorragende Manschette (3.5) umfasst, die eine Kontaktfläche bildet, die dazu ausgebildet ist, an einem ebenen Abschnitt nahe der Öffnung (10.1.1) oder Vertiefung der Induktionsheizeinheit (10) anzuliegen, und wobei der eine oder die mehreren weiteren hakenförmigen Vorsprünge (3.4) dazu ausgebildet sind, hinter einen Rand der Öffnung (10.1.1) oder Vertiefung einzugreifen, wenn die Manschette (3.5) an dem ebenen Abschnitt der Induktionsheizeinheit (10) anliegt.

2. Anpresseinheit (1) nach Anspruch 1, wobei der Federkopplungsabschnitt (3.1) eine Vertiefung (3.2) zum Aufnehmen eines Abschnitts des Federelements (2) umfasst.

3. Anpresseinheit (1) nach Anspruch 1 oder 2, wobei das Federelement (2) eine Druckfeder, insbesondere eine Spiraldruckfeder, ist.

4. Anpresseinheit (1) nach einem der vorhergehenden Ansprüche, wobei ein erstes freies Ende des Federelements (2) in dem Kopplungselement (3) angeordnet ist und ein zweites freies Ende aus dem Kopplungselement (3) herausragt.

5. Anpresseinheit (1) nach einem der vorhergehenden Ansprüche, wobei das Federfixierungsmittel dazu ausgebildet ist, ein erstes freies Ende des Federelements (2) in dem Federkopplungsabschnitt (3.1) zu fixieren.

6. Anpresseinheit (1) nach einem der vorhergehenden Ansprüche, wobei das Kopplungselement (3) dazu ausgebildet ist, in eine Öffnung (10.1.1) oder Vertiefung eingesetzt zu sein, die in der Induktionsheizeinheit (10) bereitgestellt ist.

7. Anpresseinheit (1) nach Anspruch 6, wobei das Kopplungselement (3) einen Außenquerschnitt umfasst, der an den Querschnitt der Öffnung (10.1.1) oder Vertiefung angepasst ist, die in der Induktionsheizeinheit (10) bereitgestellt ist.

8. Anpresseinheit (1) nach Anspruch 6 oder 7, wobei der Querschnitt des Kopplungselements (3) eine runde Form oder bogenförmige Abschnitte (3a, 3b) umfasst, um in einer runden Öffnung (10.1.1) oder Vertiefung der Induktionsheizeinheit (10) aufgenommen zu sein.

9. Induktionskochfeld, umfassend eine Induktionsheizeinheit (10), die eine oder mehrere Induktionsspulen umfasst, und eine Kochfeldplatte, wobei die Induktionsheizeinheit (10) eine oder mehrere Anpresseinheiten (1) nach einem der vorhergehenden Ansprüche umfasst, um die Induktionsheizeinheit (10) gegen die Kochfeldplatte zu pressen.

## Revendications

1. Entité de pression (1) pour presser une unité de chauffage par induction (10) contre une plaque chauffante, l'entité de pression (1) comprenant :
- un élément à ressort (2) ;
- un élément d'accouplement (3), ledit élément d'accouplement (3) étant adapté pour accoupler de façon détachable l'entité de pression (1) à l'unité de chauffage par induction (10) ;
dans laquelle l'élément d'accouplement (3) comprend une partie d'accouplement à ressort (3.1) adaptée pour recevoir l'élément à ressort (2), ladite partie d'accouplement à ressort (3) étant adaptée pour recevoir l'élément à ressort (2) de telle sorte qu'une partie de l'élément à ressort (2) fasse saillie hors de l'élément d'accouplement (3),
dans laquelle
la partie d'accouplement à ressort (3.1) comprend un moyen de fixation à ressort pour fixer une partie d'élément à ressort, ledit moyen de fixation à ressort comprend des saillies en forme de crochet (3.3) adaptées pour s'engager dans une spirale de l'élément à ressort (2), dans laquelle lesdites saillies en forme de crochet (3.3) font saillie radialement dans la partie d'accouplement à ressort (3.1), et dans laquelle l'élément d'accouplement (3) comprend un moyen de fixation s'engageant dans une section de l'unité de chauffage par induction (10) pour fixer l'élément d'accouplement (3) sur l'unité de chauffage par induction (10), et dans laquelle ledit moyen de fixation comprend une ou plusieurs saillies supplémentaires en forme de crochet (3.4) adaptées pour s'engager dans ou derrière une section de l'unité de chauffage par induction (10), et dans laquelle l'élément d'accouplement (3) comprend un collier radialement saillant (3.5) formant une surface de contact adaptée pour reposer contre une partie plane près de l'ouverture (10.1.1) ou l'évidement de l'unité de chauffage par induction (10), et dans laquelle l'une ou les plusieurs saillies supplémentaires en forme de crochet (3.4) sont adaptées pour s'engager derrière un bord de l'ouverture (10.1.1) ou de l'évidement lorsque le collier (3.5) repose contre la partie plane de l'unité de chauffage par induction (10).

2. Entité de pression (1) selon la revendication 1, dans laquelle la partie d'accouplement à ressort (3.1) comprend un évidement (3.2) destiné à recevoir une partie dudit élément à ressort (2).

3. Entité de pression (1) selon la revendication 1 ou 2, dans laquelle l'élément à ressort (2) est un ressort de compression, spécifiquement un ressort de compression spiralé.

4. Entité de pression (1) selon l'une quelconque des revendications précédentes, dans laquelle une première extrémité libre de l'élément à ressort (2) est agencée à l'intérieur de l'élément d'accouplement (3) et une seconde extrémité libre fait saillie hors de l'élément d'accouplement (3).

5. Entité de pression (1) selon l'une quelconque des revendications précédentes, dans laquelle le moyen de fixation à ressort est adapté pour fixer une première extrémité libre de l'élément à ressort (2) dans la partie d'accouplement à ressort (3.1).

6. Entité de pression (1) selon l'une quelconque des revendications précédentes, dans laquelle l'élément d'accouplement (3) est adapté pour être inséré dans une ouverture (10.1.1) ou un évidement prévu à l'intérieur de l'unité de chauffage par induction (10).

7. Entité de pression (1) selon la revendication 6, dans laquelle l'élément d'accouplement (3) comprend une section transversale extérieure adaptée à la section transversale de l'ouverture (10.1.1) ou de l'évidement prévu à l'intérieur de l'unité de chauffage par induction (10).

8. Entité de pression (1) selon la revendication 6 ou 7, dans laquelle la section transversale de l'élément d'accouplement (3) comprend des parties de forme circulaire ou en forme d'arc (3a, 3b) afin d'être reçues dans une ouverture (10.1.1) ou un évidement circulaire de l'unité de chauffage par induction (10).

9. Table de cuisson à induction, comprenant une unité de chauffage par induction (10) comprenant une ou plusieurs bobines d'induction et une plaque chauffante, l'unité de chauffage par induction (10) comprenant une ou plusieurs entités de pression (1) selon l'une quelconque des revendications précédentes afin de presser l'unité de chauffage par induction (10) contre la plaque chauffante.
